# EUROPÄISCHE PATENTSCHRIFT

(11) **EP 4 545 453 B1**
(45) Veröffentlichungstag und Bekanntmachung des Hinweises auf die Patenterteilung: **15.04.2026**
(21) Anmeldenummer: 24208230.3
(22) Anmeldetag: 22.10.2024
(51) Int. Cl.: B65G 17/08, B65G 43/00, B65G 43/02

(54) **VERFAHREN FÜR EINE PRODUKTIONSANLAGE**
METHOD FOR A PRODUCTION PLANT
PROCÉDÉ POUR UNE INSTALLATION DE PRODUCTION

(30) Priorität: 26.10.2023 DE 102023129598
(43) Veröffentlichungstag der Anmeldung: 30.04.2025
(73) Patentinhaber: Heye International GmbH, 31683 Obernkirchen (DE)
(72) Erfinder: Schöttelndreier, Ralf, 31688 Nienstädt (DE); Bindewald, Kai, 31655 Stadthagen (DE)
(74) Vertreter: Michalski Hüttermann & Partner Patentanwälte mbB

(56) Entgegenhaltungen:
- DE-A1- 102016 111 421
- JP-B2- 5 862 987
- US-A1- 2022 003 636
- US-B2- 11 174 106

## Beschreibung

Die Erfindung betrifft ein Verfahren für eine Produktionsanlage, wobei die Produktionsanlage eine IS-Maschine zur Herstellung von Glasbehältern und ein eine Antriebseinrichtung aufweisendes Förderband zum Fördern der Glasbehälter aufweist.

IS-Maschinen zur Herstellung von Glasbehältern sind aus dem Stand der Technik bereits seit Jahrzehnten bekannt. Die Funktion einer IS-Maschine stellt sich typischerweise wie folgt dar:
In einer Wanne wird Glas geschmolzen. Dieses wird über eine Rinne (Feederkanal) geleitet. Am Ende des Feederkanals befindet sich ein Glasauslass (Spout). Im Spout wird mittels eines Rührwerkes oder einer drehenden Tube das Glas homogenisiert. Die Tube dient weiterhin zur Dosierung des Glasausflusses. Ein Plunger presst das Glas aus dem Spout. Beim Rückzug des Plungers wird ein portionierter Glassposten (Tropfen) durch eine Schere (ab-)geschnitten.

Mittels eines Tropfenverteilers werden die Glasposten über Metallrinnen den einzelnen Sektionen zugeführt. Die Behälterformung in einer IS-Maschine ist ein 2-stufiger Formgebungsprozess. In einem ersten Schritt wird ein Vorformling gepresst oder geblasen. Der Vorformling wird in einem zweiten Schritt in die Behälter-Endform geblasen. In beiden Prozessschritten werden der Vorformling und der Behälter kontinuierlich abgekühlt. Ist eine thermische Stabilität erreicht, wird der Behälter aus der Form entnommen und auf einer Absetzplatte abgestellt. Dort wird er weiterhin gekühlt, damit keine Rückerwärmung eintritt und sich der Behälter noch deformiert.

Von den Absetzplatten der IS-Maschine werden die Behälter in einen Kühlofen transportiert. Zunächst werden die Behälter durch einen Pusher von der Absetzplatte auf ein Maschinenband geschoben. Am Maschinenband sind eine Lichtschranke und ein Auswerfer installiert, wobei der Auswerfer Behälter nach dem Start einer Sektion, Schmierbehälter oder andere fehlerbehaftete Behälter aus dem Transport entfernt. Anschließend folgt auf dem Maschinenband ein Vergütungstunnel, in dem die Behälter eine Beschichtung erhalten, welche die Kratzempfindlichkeit der Behälter reduziert. Dann werden in der Regel die Behälter zu einer Umlenkecke geführt. Diese verändert die Transportrichtung um 90° und reduziert die Behälterabstände. Ein Querband vor dem Kühlofeneingang transportiert die Behälter zum Einbringen in den Kühlofen. Den Vorgang übernimmt ein Einschieber, der die Behälter reihenweise auf Kühlofenbreite in den Kühlofen schiebt.

Wenn die Glasbehälter fertig geformt sind, werden sie von einer Entnahmevorrichtung aus den Fertigformen entnommen, um sie in der Regel zu einer Absetzplatte zu befördern, auf der sie abgekühlt werden und von der sie auf das Maschinenband geschoben werden. Eine solche herkömmliche Entnahmevorrichtung ist bekannt. Die bekannte Entnahmevorrichtung ist beispielsweise zur Verwendung mit einer Doppeltropfenmaschine vorgesehen, die zwei Entnahmezangen, einen Träger für die Entnahmezangen und einen Mechanismus umfasst, der so angeordnet ist, dass er den Träger bewegen kann, um die Zangen zwischen einer Aufnahmeposition, in der die Zangen geformte Glasartikel aus den Formen der Maschine aufnehmen können, und einer Absetzposition, in der die Zangen die Glasartikel beispielsweise an einer Kühlstation absetzen können, hin und her zu bewegen.

Beim Einsatz einer solchen Entnahmevorrichtung wird der erforderliche Abstand der Entnahmezange voneinander durch den Abstand der Fertigformen voneinander bestimmt. Somit würde ohne weitere Maßnahmen der Abstand der Fertigformen auch den Abstand der Glasbehälter auf der Absetzplatte bestimmen. Herkömmliche Ausstoßmechanismen, die die Glasbehälter von der Absetzplatte auf ein Förderband schieben, können den Abstand der Glasbehälter auf dem Förderband durch einen geeigneten Abstand von Ausstoßfingern von dem Abstand auf der Absetzplatte verändern, aber das Ausmaß, in dem dies möglich ist, wird durch die Größe und den Abstand der Glasbehälter und die Notwendigkeit, die Finger zwischen den Glasbehältern zu positionieren, stark eingeschränkt. Diese Einschränkung ist bei einer Drei- oder Viertropfenmaschine noch größer als bei einer Doppeltropfenmaschine. Auch wenn versucht wird, den Abstand zu verändern, bewegt sich mindestens einer der Ausstoßfinger zwangsläufig relativ schnell, wenn er den entsprechenden Glasbehälter berührt, wodurch die Gefahr besteht, dass der Glasbehälter beschädigt wird.

Mit dem zunehmenden Einsatz von Mehrtropfenmaschinen und den Bemühungen, die Arbeitsgeschwindigkeit der IS-Maschinen zu erhöhen, ist es auch erforderlich, die Fördergeschwindigkeiten zu erhöhen. Allerdings ist es auch ein Ziel, die Fördergeschwindigkeit so einzustellen, dass Wirtschaftlichkeitsaspekte berücksichtigt werden und mit steigenden Fördergeschwindigkeiten keine Probleme mit Instabilitäten der Glasbehälter auf dem Förderband auftreten. Aus diesem Grund wird in der Regel angestrebt, auf dem Maschinenband einen Abstand der Glasbehälter voneinander zu erzielen, der kleiner ist als der Abstand der Fertigformen voneinander. Ein geringerer Abstand der Glasbehälter auf dem Maschinenband zueinander führt dazu, dass eine geringere Fördergeschwindigkeit des Maschinenbands gewählt werden kann, was einem stabilen und störungsfreien Transport der Glasbehälter zuträglich ist.

Bei einer Antriebsvorrichtung mit wenigstens einem zu einer Bewegung antreibbaren Antriebselement, bei dessen Bewegung mit wenigstens einem Geber Weginkremente generierbar und auswertbar sind, ist gemäß der DE 10 2010 043 057 A1 für das Antriebselement eine eine betriebsbedingte Längung des Förderelementes rechnerisch kompensierende Wegstrecken-Kalibriervorrichtung vorgesehen. Verfahrensgemäß wird eine auftretende Längung im Betrieb permanent und/oder periodisch entweder automatisch und/oder bedienergeführt anhand der Weginkremente und von Durchgangssignalen am Antriebselement vorgesehener Markierungen gemessen und gegebenenfalls bei einer Positions- oder Wegstreckenbestimmung des Antriebselementes rechnerisch kompensiert.

Die DE 102 45 323 B4 beschreibt ein Verfahren und eine Vorrichtung zur Ermittlung der Geschwindigkeit eines Kettengliederbandes. Wesentlich ist dabei, dass das Band entlang einem ersten und einem zweiten Sensor bewegt wird, welche seitlich des Bandes in vorgegebenem Abstand voneinander fest angeordnet und so ausgelegt sind, dass sie ein Signal produzieren, das eine typische zeitliche Abhängigkeit von Unregelmäßigkeiten des Abstands der einzelnen Kettenglieder zu jeweils einem der Sensoren aufweist. Durch Ermittlung eines vom ersten Sensor herrührenden Signalabschnitts und eines vom zweiten Sensor herrührenden Signalabschnitts, welche eine gleiche relative Amplitudenstruktur aufweisen, kann eine zeitliche Differenz der beiden Signalabschnitte und daraus zusammen mit dem bekannten Abstand der beiden Sensoren voneinander die Geschwindigkeit des Bandes ermittelt werden. Dies kann auch genutzt werden, um eine Längung des Bandes zu ermitteln.

Die CN 1 10 814 045 A beschreibt ein automatisches Positionierungssteuerungsverfahren für eine warmgewalzte, sich aufrollende Kette. Das Verfahren umfasst die folgenden Schritte: Messen der tatsächlichen Länge jeder Unterkette der Kette; Berechnen und Ermitteln der durchschnittlichen Strecklänge jeder Unterkette der Kette entsprechend der tatsächlichen Länge und der Standardlänge jeder Unterkette der Kette; Berechnen und Ermitteln eines relativen Positionsänderungswerts der Kette entsprechend der durchschnittlichen Strecklänge und eines tatsächlichen Verschiebungswerts eines einzelnen Vorgangs der Kette, der von einem an der Kette installierten Verschiebungsmessgerät erfasst wird; Berechnen und Bestimmen der Positionsabweichung der Kette gemäß dem relativen Positionsänderungswert und der Verschiebungsreferenz des Steuersystems der Kette; Berechnen und Bestimmen einer adaptiven Proportionalpositionsreferenz eines Proportionalreglers gemäß der Positionsabweichung und dem Proportionalkoeffizienten des Proportionalreglers in dem Steuersystem der Kette und Einstellen des automatischen Steuerprogramms eines Steuersystems der Kette auf der Grundlage der adaptiven Proportionalpositionsreferenz. Gemäß dem Steuerungsverfahren kann, wenn die Kette mechanisch gedehnt wird, immer noch eine genaue Positionierung eines Positionierungssattels auf der Kette erreicht werden.

Die DE 20 2008 011 454 U1 beschreibt eine Vorrichtung zur Bildung von Produktgruppen aus einem Strom aus einer über Fördereinrichtungen zugeführten Vielzahl identischen Stückgutes mit einer Zuführbahn und taktweise quer zur Transportebene in den Produktstrom eingreifenden Einteilelementen an wenigstens einem Paar angetriebener, endlos umlaufender flexibler Antriebselemente, wobei an jedem dieser Paare flexibler Antriebselemente mindestens ein Querträgern angeordnet ist, an welchem Einteilelemente gehalten sind, wobei innerhalb einer Vorrichtung wenigstens drei Paare flexibler Antriebselemente vorgesehen sind, wobei jedes dieser Paare mit einem eigenen Geschwindigkeitsprofil betreibbar ist.

Die US 10 538 393 B2, die die Merkmale des Oberbegriffs des Anspruchs 1 offenbart, beschreibt eine Transportvorrichtung mit einem Förderband, das mit Markierungen versehen ist. Ein Sensor erkennt diese Markierungen und sendet entsprechende Signale an eine Steuerung. Basierend auf diesen Signalen kann die Steuerung die Dehnung des Förderbands überwachen und gegebenenfalls Anpassungen vornehmen, um den Betrieb der Transportvorrichtung zu optimieren.

Die JP 5 862987 B2 beschreibt eine Vorrichtung zur Artikelsortierung, die dazu dient, Unfälle zu vermeiden, bei denen ein Artikel von einem Schuh eingeklemmt wird, und gleichzeitig die Sortiereffizienz zu erhöhen. Die Sortiervorrichtung umfasst eine Antriebsvorrichtung zur Rotation, umlaufende Endlosketten, die entlang einer Förderstrecke zirkulieren, mehrere Platten, auf denen Artikel transportiert werden, sowie daran befestigte Schuhe zur Führung oder Sortierung der Artikel. Eine Prüfeinrichtung ist vorgesehen, um zu bestätigen, dass sich der Schuh entlang der Platte bewegt. Diese Prüfeinrichtung ist stromabwärts in Förderrichtung hinter einer Führungsschiene für die Bewegung der Schuhe angeordnet.

Es ist die Aufgabe der Erfindung, Lösungen im Zusammenhang mit IS-Maschinen anzugeben, um die Arbeitsgeschwindigkeit zu erhöhen, Ausschuss zu verringern und die Möglichkeiten zur Überwachung zu verbessern.

Diese Aufgabe wird durch den Gegenstand von Anspruch 1 gelöst. Bevorzugte Weiterbildungen der Erfindung sind in den Unteransprüchen beschrieben.

Erfindungsgemäß vorgesehen ist somit ein Verfahren zur Bereitstellung eines Fördergeschwindigkeitsprofils für eine Antriebseinrichtung eines Förderbands einer Produktionsanlage, wobei die Produktionsanlage eine IS-Maschine zur Herstellung von Glasbehältern und das Förderband zum Fördern der Glasbehälter aufweist, wobei auf dem Förderband Glasbehälter platziert werden und/oder das Förderband Glasbehälter abfördert, wobei Positionsdaten der Glasbehälter auf dem Förderband erfasst werden, wobei auf Grundlage von den Positionsdaten eine Bandlängung bestimmt wird und wobei die Bandlängung sich auf jeweils einzelne Bandsegmente des Förderbands bezieht, wobei auf Grundlage von der Bandlängung das Fördergeschwindigkeitsprofil für das Förderband bereitgestellt wird.

In anderen Worten wird das eingangs erwähnte Verfahren zur Lösung der Aufgabe dahin ausgerichtet, ein Fördergeschwindigkeitsprofil für das Förderband bereitzustellen, beispielsweise um das Förderband durch abschnittsweises Variieren der Fördergeschwindigkeit gezielt an die Bandlängung des Förderbands anzupassen. Das Fördergeschwindigkeitsprofil beinhaltet insbesondere den Verlauf der einzustellenden Fördergeschwindigkeit in Bezug auf die gesamte Bandlänge des Förderbands, um die Glasbehälter näherungsweise trotz einer z.B. verschleißbedingten Bandlängung gleich beabstandet zu fördern. Vorzugsweise wird eine Bandlängung festgestellt, indem mittels des Förderbands, insbesondere bei konstanter Fördergeschwindigkeit, Glasbehälter abgefördert werden und indem diese Glasbehälter mit Blick auf ihre Position zueinander und/oder zum Förderband ausgewertet werden. Die Bandlängung bezieht sich vorschlagsgemäß auf einzelne Abschnitte des Förderbands, so dass ein Fördergeschwindigkeitsprofil abgeleitet werden kann, das entsprechend der abschnittsweisen Längung einen Geschwindigkeitsausgleich beim Fördern der Glasbehälter vorgibt.

Im Rahmen der Erfindung ist erkannt worden, dass ein Förderband sich mit der Zeit im Betrieb verschleißbedingt nicht gleichmäßig längt, so dass "lange" und "kurze" Bandsegmente hintereinander liegen. Bei Tandemmaschinen bzw. IS-Maschinen in Tandemanordnung besteht das Förderband insbesondere aus zwei Abschnitten, so dass der Verschleiß dort unterschiedlich sein kann. Insbesondere ändert sich die effektive Fördergeschwindigkeit für jedes Teilstück bzw. Bandsegment des Förderbands, da die Teilstücke länger oder kürzer sind als das theoretisch angenommene Maß. Dadurch können die Glasbehälter unter Umständen nicht mehr in einem gleichen Abstand zueinander stehen. Im Rahmen der Erfindung ist zugleich erkannt worden, dass das Anpassen der Fördergeschwindigkeit an die ungleichmäßige Bandlängung sehr einfach umgesetzt werden kann, indem das Förderband im Betrieb mit geförderten Glasbehältern hinsichtlich Positionsdaten der Glasbehälter beobachtet wird. Daraus ergibt sich die abschnittsweise Bandlängung, woraus ein Fördergeschwindigkeitsprofil für das Förderband abgeleitet werden kann.

Das Förderband kann ein Maschinenband aber auch ein Querband sein.

Vorteilhaft ermöglicht die Erfindung die Bereitstellung eines Fördergeschwindigkeitsprofils, das sich dazu eignet, eine verschleißbedingte und/oder fertigungsbedingte Bandlängung auszugleichen. Das Fördergeschwindigkeitsprofil kann vorteilhaft als neues Bewegungsprofil an die Antriebseinrichtung des Förderbands gesendet bzw. von diesem empfangen werden, so dass das Band mit angepasster Fördergeschwindigkeit betrieben werden kann. Insbesondere ergibt sich zumindest theoretisch ein näherungsweise gleicher Glasbehälterabstand über das gesamte Förderband und ein gleichmäßiger Einlauf, beispielsweise in eine Umlenkecke oder zum Kühlofen hin.

Durch den Ausgleich der Bandlängung des Förderbandes können Startzeiten einer Einschiebeeinrichtung, z.B. zu einem Kühlofen hin, automatisiert gesteuert werden. Insbesondere können Pusher-Startzeiten automatisiert gesteuert werden, um mittels eines Pushers bzw. einer Einschiebeeinrichtung sicherer vom Maschinenband zum Querband bzw. vom Querband zum Kühlofen schieben zu können.

Die Erfindung ermöglicht auch, dass Informationen zur Bandlängung bereitgestellt werden. Es können Rückschlüsse auf den Verschleiß des Förderbands ermöglicht werden. So kann auf einfache Weise erkannt werden, ob Handlungsbedarf hinsichtlich der Abnutzung bzw. des Verschleißes des Förderbands besteht.

Insbesondere ist unter dem Fördergeschwindigkeitsprofil ein Verlauf der Soll-Geschwindigkeit und/oder der Drehzahl der Antriebseinrichtung zu verstehen, wobei der Verlauf sich vorzugsweise auf die gesamte Länge des Förderbands bzw. einen vollen Bandumlauf bezieht. Das Fördergeschwindigkeitsprofil wiederholt sich insoweit für jeden Turnus einer Förderbandumdrehung bzw. einen vollen Bandumlauf. Vorzugsweise wird das Fördergeschwindigkeitsprofil auf Grundlage von Positionsdaten bereitgestellt, die bei umlaufend konstanter Fördergeschwindigkeit erfasst worden sind.

Ein Förderband im Sinne der vorliegenden Offenbarung weist vorzugsweise ein endloses Band zur insbesondere geradlinigen und/oder horizontalen Förderung von Glasbehältern auf. Das endlose Band läuft beispielsweise oberseitig in eine Richtung und unterseitig in entgegengesetzter Richtung. Das Förderband kann abschnittsweise oder vollständig horizontal, ansteigend oder absteigend fördernd ausgerichtet sein. Das Förderband bzw. das endlose Band weist vorzugsweise einen hitzebeständigen Werkstoff für die Auflage der heißen Glasbehälter auf.

Das Förderband ist vorzugsweise aus den Bandsegmenten zusammengesetzt, die in Umfangsrichtung des Förderbands miteinander verbunden bzw. aneinander festgelegt sind. Die Bandsegmente können starr oder flexibel ausgebildet sein. Die Bandsegmente können schwenkbar miteinander verbunden sein, beispielsweise im Sinne von Gliedern einer Fahrradkette. Beispielsweise findet auf einem Bandsegment wenigstens oder höchstens ein Abschnitt eines Glasbehälters Platz, wobei insbesondere auf mehreren aufeinanderfolgenden Bandsegmenten, beispielsweise vier oder mehr, alle Abschnitte eines Glasbehälters Platz finden bzw. der ganze Glasbehälter Platz findet. Als ein Abschnitt des Glasbehälters soll insbesondere ein Segment oder ein Teil des Glasbehälters verstanden werden, der monolithisch mit wenigstens einem anderen Abschnitt/Segment/Teil verbunden ist.

Es können Bandsegmente als Fördersegmente vorgesehen sein, die zum Fördern der Glasbehälter vorgesehen sind. Fördersegmente werden vorzugsweise nicht direkt angetrieben.

Es können Bandsegmente als Verbindungs- und/oder Antriebssegmente vorgesehen sein, die zur Verbindung zweier anderer Bandsegmente, insbesondere zweier Fördersegmente, dienen und die, insbesondere wie auch die Fördersegmente, zum Fördern von Glasbehältern dienen. Verbindungs- und/oder Antriebssegmente weisen bevorzugt einen oder mehrere Eingriffsmöglichkeiten auf, die abgewandt von den Glasbehältern weisend ausgerichtet sind und zum Eingriff durch oder in ein Antriebsrad vorgesehen sind. Bei der Eingriffsmöglichkeit handelt es sich vorzugsweise um einen Vorsprung, der von einem mit Zähnen versehenen Antriebsrad erfasst werden kann. Verbindungs- und/oder Antriebssegmente werden vorzugsweise direkt angetrieben.

Als Bandsegmente können grundsätzlich alle Abschnitte des Förderbands angesehen werden, soweit eine individuelle Längung des jeweiligen Abschnitts vorliegen kann. Einzelne Bandsegmente müssen nicht zwangsläufig einzeln separierbare Bestandteile des Förderbands sein. Im Grunde kann ein einstückiges bzw. monolithisch umlaufendes Förderband auch so betrachtet werden, dass es Bandsegmente mit unterschiedlichen Längungen aufweisen. Diese Bandsegmente gehen dann praktisch "nahtlos" ineinander über.

Die Antriebseinrichtung des Förderbands weist vorzugsweise einen Antriebsmotor und eine Motorsteuerung für den Antriebsmotor auf. Die Motorsteuerung kann auf Grundlage des Fördergeschwindigkeitsprofils den Antriebsmotor steuern, um die abschnittsweise bzw. segmentweise Bandlängung auszugleichen. Die Antriebseinrichtung weist vorzugsweise wenigstens ein Antriebsrad auf, das zum Eingriff in die Bandsegmente bzw. Fördersegmente vorgesehen ist.

Unter den Positionsdaten sind insbesondere Bewegungs- und/oder Ortsangaben zu den Glasbehältern zu verstehen, beispielsweise in Form von computerverarbeitbaren Daten bzw. Informationen. Die Positionsdaten können weisen beispielsweise unmittelbar oder mittelbar, das heißt offen dargelegt bzw. durch Verarbeitung der Positionsdaten noch abzuleiten, Angaben darüber aufweisen, wo die Glasbehälter auf dem Förderband bzw. Bandsegment platziert sind, auf welchem Bandsegment sie platziert sind, mit welchem Abstand zum nächsten Glasbehälter sie platziert sind, mit welcher Geschwindigkeit sie unterwegs sind und/oder ob der Glasbehälter aufrecht steht und/oder beschädigt ist.

Unter der Bandlängung ist insbesondere eine verschleißbedingte und/oder toleranzbedingte Längenabweichung einzelner und/oder aller Bandsegmente zu einer Soll-Länge zu verstehen. Normalerweise wird das Förderband im Betrieb verschleißbedingt länger, unz war über seine Länge hinweg in ungleichmäßiger Form. Es ist aber auch denkbar, dass die Bandlängung sich auf toleranz- bzw. fertigungsbedingte Längungen oder Abweichungen der Soll-Länge bezieht. Insbesondere ist die Bandlängung ein Förderbandinhärenter Parametersatz, der vorzugsweise fortwährend erfasst wird. Grundsätzlich kann angenommen werden, dass die Bandlängung über die Lebensdauer eines Förderbandes hinweg ansteigt.

Vorteilhaft wird je Bandsegment oder je zwei benachbarter Bandsegmente wenigstens ein Abschnitt eines einzelnen Glasbehälters platziert und/oder abgefördert. Beispielsweise werden dem Förderband die Glasbehälter zugeschoben, wobei für jedes Bandsegment oder für jedes Paar aus Bandsegmenten vorgesehen ist, einen Abschnitt der zugeschobenen Glasbehälter abzutransportieren. Zwei benachbarte Bandsegmente können in einer Umfangsrichtung des Förderbands einen Pitch bzw. Abstand im Bereich zwischen 5 und 25 mm, insbesondere von 12,7 mm ± 2 mm ausbilden. In der Praxis ist es besonders bevorzugt so, dass mehrere benachbarte Bandsegmente einen ganzen Glasbehälter abfördern können, wobei jedes dieser Bandsegmente entsprechend einen Abschnitt tragen kann. Beispielsweise bilden zwei zueinander benachbarte Bandsegmente einen Pitch bzw. Abstand längs der Umfangsrichtung in Höhe von einem halben Zoll aus, also entsprechend der Hälfte von 2,54 cm bzw. ungefähr 12,7 mm. Ein Glasbehälter kann sich über mehrere Pitches (z.B. mindestens zwei, drei oder vier) erstrecken, entsprechend seiner Größe bzw. seines auf den Bandsegmenten aufstehenden Durchmessers. Dies ist besonders zweckmäßig, um besonders verlässliche Positionsdaten bzw. Informationen zur Bereitstellung der Bandlängung zu erzeugen. Ebenfalls können so flexibel verschiedenste Glasbehälter gehandhabt werden.

Vorzugsweise ist vorgesehen, dass auf Grundlage der Positionsdaten zeitliche und/oder örtliche Abstände von geförderten Glasbehältern zueinander bestimmt werden. Beispielsweise wird beim Fördern der Glasbehälter gemessen, in welchem zeitlichen oder örtlichen Abstand die Glasbehälter zueinander stehen. Besonders vorteilhaft wird mit einem Taktgeber, wie einer Lichtschranke, gearbeitet, um die Positionsdaten bzw. Abstände bereitzustellen. Die Positionsdaten können ausgewertet werden, mit Blick darauf, welchen Abstand die aufeinander folgenden Glasbehälter zueinander aufweisen. In bevorzugter Weise weitergebildet wird das Verfahren dadurch, dass auf der Grundlage der Abstände das Fördergeschwindigkeitsprofil bereitgestellt wird. Sowohl mit den zeitlichen als auch mit den örtlichen Abständen kann das Fördergeschwindigkeitsprofil besonders zweckmäßig hergeleitet werden.

Die Abstände zwischen Glasbehältern werden besonders bevorzugt als Zeitdifferenzen zwischen zwei aufeinanderfolgenden Glasbehältern erfasst. Mittels einer Motordrehzahl der Antriebseinrichtung, einer Anzahl Zähne am Antriebsritzel der Antriebseinrichtung und der Bandlänge bei Inbetriebnahme kann das Fördergeschwindigkeitsprofil hergeleitet bzw. berechnet werden und insbesondere an die Antriebseinrichtung gesendet werden. Insbesondere kann über eine Mustererkennung bei den Zeitdifferenzen die Bandlänge verifiziert werden.

Vorzugsweise ist vorgesehen, die Bandlängung im Betrieb des Förderbands auszugleichen, indem das Förderband in einem Abschnitt mit einem gelängten Bandsegment schneller betrieben wird als in einem Abschnitt mit einem Bandsegment, das kürzer als das gelängte Bandsegment ist. Entsprechend kann das Fördergeschwindigkeitsprofil daran angepasst werden, für jeden Abschnitt des Förderbands aus zumindest einem Bandsegment eine individuelle Fördergeschwindigkeit vorzugeben. So können die Glasbehälter trotz einer ungleichmäßigen Bandlängung besonders gleichmäßig und möglichst gleich beabstandet gefördert werden. Das kann auch die nutzbare Lebensdauer des Förderbands verlängern.

Das Fördergeschwindigkeitsprofil kann an die Antriebseinrichtung gesendet und/oder von der Antriebseinrichtung abgerufen werden. Beispielsweise kann das Fördergeschwindigkeitsprofil im Zusammenhang mit einer Wartung der Produktionsanlage bereitgestellt, gesendet und/oder abgerufen werden. Das Fördergeschwindigkeitsprofil kann auch regelmäßig bzw. automatisch, insbesondere unabhängig von einer Wartung, bereitgestellt, gesendet und/oder abgerufen werden.

Insbesondere wird vorgeschlagen, dass die Antriebseinrichtung auf Grundlage des Fördergeschwindigkeitsprofils betrieben wird. Insoweit kann das Förderband mit über einen vollen Bandumlauf variabler Fördergeschwindigkeit betrieben werden, die die individuelle Bandlängung ausgleicht. Die Glasbehälter werden damit besonders gleichmäßig befördert, beispielsweise zwischen der IS-Maschine und einem Kühlofen. Damit kann Ausschuss verringert werden und es kann die Produktivität gesteigert werden.

Im Folgenden wird ferner ein System zur Durchführung des Verfahrens beschrieben. Das System weist eine Sensorvorrichtung zum Erfassen von den Positionsdaten und eine Steuerungsvorrichtung auf. Die Steuerungsvorrichtung ist dabei dazu eingerichtet, das Fördergeschwindigkeitsprofil bereitzustellen. Die Steuerungsvorrichtung ist dazu mit der Sensorvorrichtung verbunden, beispielsweise kabellos oder kabelgebunden, insbesondere zur unidirektionalen oder bidirektionalen Kommunikation mit der Sensorvorrichtung. Die Steuerungsvorrichtung kann eine Schnittstelle zur Kommunikation aufweisen, beispielsweise um das Fördergeschwindigkeitsprofil abrufen und/oder versenden zu können, beispielsweise an eine Antriebseinrichtung des Förderbands. Insbesondere kann die Steuerungsvorrichtung das Fördergeschwindigkeitsprofil auch zum Abruf bereitstellen, insbesondere von der Antriebseinrichtung und/oder von einem Bediener.

Zweckmäßig ist das System, insbesondere dessen Sensorvorrichtung, direkt an einem Förderband angeordnet, dessen Bandlängung ermittelt werden soll bzw. an dem Positionsdaten erfasst werden sollen. Insbesondere ist die Sensorvorrichtung an einem einer IS-Maschine nachgeordneten Förderband angeordnet, wie einem Maschinenband und/oder einem Querband.

Die Sensorvorrichtung weist vorzugsweise eine Lichtschranke und/oder eine Kamera und/oder einen Abstandssensor auf. Die Lichtschranke ist beispielsweise quer zur Förderrichtung bzw. seitlich vom Förderband auf die Glasbehälter ausgerichtet. Die Kamera kann seitlich oder von oben auf das Förderband ausgerichtet angeordnet sein, um die Glasbehälter zu erfassen. Der Abstandssensor kann wie die Lichtschranke oder die Kamera ausgerichtet sein.

Die Lichtschranke weist insbesondere eine Lichtquelle, einen Lichtsensor und ggf. einen Reflektor auf. Die Lichtschranke kann erfassen, wenn ein Objekt wie ein Glasbehälter sich in der Strecke von dem von der Lichtquelle ausgesendeten Licht befindet. Die Lichtschranke kann die Positionsdaten als Signal bereitstellen.

Die Kamera dient insbesondere zum bildlichen Erfassen von den Glasbehältern. Beispielsweise sind ein Bildsensor bzw. CCD-Sensor und eine Optik vorgesehen, um die Glasbehälter lichtoptisch zu erfassen und/oder um Bildinformationen als die Positionsdaten zu generieren. Insbesondere ist die Kamera eine Digitalkamera. Die Kamera kann mit einer Beleuchtung für die Glasbehälter vorgesehen sein. Es können auch mehrere Kameras vorgesehen sein. Es können Fotos der Glasbehälter erstellt werden, um die Positionsdaten zu liefern. Die Kamera ermöglicht vorteilhaft die besonders originalgetreue Erfassung der Ist-Situation bei der Förderung der Glasbehälter, z.B. um die Abstände der Glasbehälter zueinander zu erkennen.

Der Abstandssensor kann einen Radarsensor aufweisen. Der Radarsensor kann Radarwellen, insbesondere elektromagnetische Wellen im Radiofrequenzbereich, aussenden, die von Objekten wie einem Glasbehälter reflektiert werden, und diese elektromagnetischen Wellen wieder empfangen. Wenn geförderte Glasbehälter den Erfassungsbereich des Abstandssensors passieren, kann insoweit auf den Abstand der Glasbehälter zueinander geschlossen werden. Der Abstandssensor kann die Positionsdaten als Signal bereitstellen.

Aufgrund des Systems wird eine Möglichkeit der Nachrüstung bestehender Produktionsanlagen dahingehend geschaffen, dass das Förderband länger betrieben werden kann und/oder dass die Herstellung hinsichtlich zu vermeidenden Ausschusses und/oder der Produktivität verbessert wird. Das System schafft es, die tatsächlichen Abstände zwischen den Glasbehältern trotz ungleichmäßiger Bandlängungen gleichmäßiger zu machen.

Die Erfindung ermöglicht es, sogenanntes "Pumpen" bzw. unregelmäßiges Ablaufen des Förderbands zu erkennen, welches im Betrieb einer Produktionsanlage mit IS-Maschine und Förderband auftreten kann. Beispielsweise kann die Grundlage für eine Warnmeldung geschaffen werden und/oder es kann eine Warnmeldung ausgesendet werden.

Nachfolgend wird die Erfindung anhand eines bevorzugten Ausführungsbeispiels unter Bezugnahme auf die Zeichnungen weiter im Detail erläutert. Dazu wird darauf hingewiesen, dass die Erfindung ein Verfahren zur Bereitstellung eines Fördergeschwindigkeitsprofils für eine Antriebseinrichtung eines Förderbands einer Produktionsanlage betrifft und die nachfolgen beschriebene Produktionsanlage und ihre Komponenten nur zur Erläuterung des erfindungsgemäßen Verfahrens erwähnt wird, ohne dass Schutz für eine solche Produktionsanlage oder ihre Komponenten also solche nachgesucht wird.

In den Zeichnungen zeigen
- Fig. 1: schematisch eine Produktionsanlage zur Durchführung eines Verfahrens gemäß einem bevorzugten Ausführungsbeispiel der Erfindung in einer Draufsicht auf eine IS-Maschine, mehrere Förderbänder, eine Umlenkecke, einen Kühlofen und zwei Systeme,
- Fig. 2A-B: schematisch ein Förderband der Produktionsanlage in einer Seitenansicht mit einer ersten Bandlängung eines Bandsegments (A) und mit einer zweiten Bandlängung eines anderen Bandsegments (B), die größer als die erste Bandlängung ist,
- Fig. 3: schematisch einen zeitabhängigen Verlauf einer Drehzahl eines Antriebsmotors einer Fördereinrichtung, die mit einem die Bandlängung ausgleichenden Fördergeschwindigkeitsprofil für zwei volle Bandumläufe betrieben wurde, und
- Fig. 4: schematisch ein Förderband zur Durchführung eines Verfahrens gemäß einem weiteren Ausführungsbeispiel der Erfindung in einer Seitenansicht mit einem geförderten Glasbehälter.

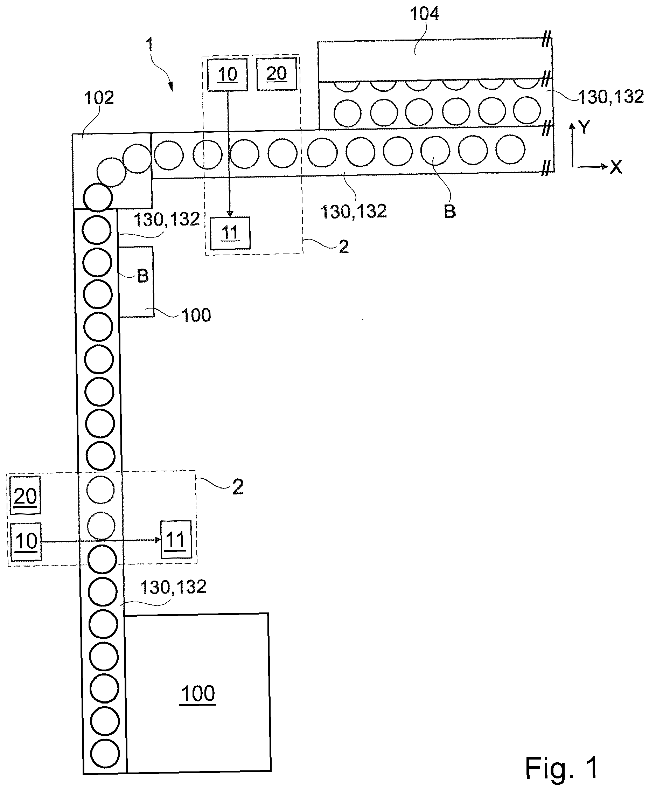

In Fig. 1 ist schematisch eine Produktionsanlage 1 dargestellt, die eine IS-Maschine 100, eine Umlenkecke 102 und einen Kühlofen 104 aufweist. Ferner ist ein Förderband 130 zwischen der IS-Maschine 100 und der Umlenkecke 102 vorgesehen, das vorliegend in Richtung Y fördert und im Allgemeinen als Maschinenband bezeichnet wird. Außerdem ist ein weiteres Förderband 130 zwischen der Umlenkecke 102 und dem Kühlofen 104 vorgesehen, das als in Richtung X fördert und als Querband bezeichnet wird. Schließlich weist der Kühlofen 104 auch ein Förderband 130 auf, das in Richtung Y fördert, vorliegend wiederum quer bzw. senkrecht zum vorhergehenden Förderband 130, also dem Querband.

Alle hier dargestellten Förderbänder 130 sind zum Fördern von Glasbehältern B vorgesehen. Bei den Glasbehältern B handelt es sich vorliegend um Glasflaschen, die in der Draufsicht einen runden Umriss aufweisen.

Mit Blick auf Fig. 1 ist jedes der Förderbänder 130 aus Bandsegmenten 132 zusammengesetzt. Die Bandsegmente 132 werden jeweils von zumindest einer hier nicht dargestellten Antriebseinrichtung angetrieben. Auf jedem Bandsegment 132 oder zumindest auf jedem Paar aus Bandsegmenten 132 steht typischerweise ein Glasbehälter B.

Wenn die Glasbehälter B mit der in Fig. 1 gezeigten IS-Maschine 100 hergestellt worden sind, werden sie vom unmittelbar nachgeordneten Förderband 130 (Maschinenband) zur Umlenkecke 102 hin abgefördert. An der Umlenkecke 102 laufen die Glasbehälter B auf und werden von dem unmittelbar nachgeordneten Förderband 130 (Querband) abgefördert. Hier ist bemerkenswert, dass eine ungleichmäßige bzw. segmentweise Bandlängung eines jeweiligen Förderbands 130 beim Abfördern von der IS-Maschine 100 und/oder von der Umlenkecke 102 aus zu ungleichmäßigem Abstand der Glasbehälter B führen könnte, insoweit das jeweilige Förderband 130 mit konstanter Drehzahl eines Antriebsmotors bzw. konstanter Fördergeschwindigkeit betrieben wird. Der ungleichmäßige Abstand von noch heißen Glasbehältern B zueinander ist regelmäßig problematisch, beispielsweise weil die Glasbehälter B von einer Einschiebeeinrichtung oder von einer Überschiebereinrichtung nicht richtig erfasst werden, was insgesamt zu Ausschuss und/oder Störungen der Herstellung führen kann. Es ist jedoch so, dass vorliegend diese Problematik gar nicht oder nur in gedämpftem Maße auftritt, weil die verschleißbedingte, also im Grunde unvermeidbare, abschnittsweise bzw. segmentweise Bandlängung durch die hier vorgestellte Lösung ausgeglichen wird, wozu hier insbesondere zwei baugleiche Systeme 2 vorgesehen ist.

Vorliegend weist die Produktionsanlage 1 ein System 2 an jeweils einem Förderband 130 auf. Das System 2 ist jeweils zur Bereitstellung eines Fördergeschwindigkeitsprofils ausgebildet. Mit dem Fördergeschwindigkeitsprofil kann die abschnittsweise bzw. segmentweise Bandlängung des jeweiligen Förderbands 130 mit dem System 2 ausgeglichen werden, insoweit das jeweilige Förderband 130 nach Maßgabe dieses Fördergeschwindigkeitsprofils betrieben wird, und insbesondere insoweit das Fördergeschwindigkeitsprofil erfindungsgemäß angepasst an die Bandlängung bereitgestellt worden ist.

Vorliegend ist eines der Systeme 2 bzw. dessen Sensorvorrichtung 10 am Querband angeordnet. Das andere System 2 bzw. dessen Sensorvorrichtung 10 ist am Maschinenband direkt hinter der IS-Maschine 100 angeordnet. Das jeweilige System 2 kann beispielsweise ein Taktsignal als Referenz nutzen.

Mit jedem der vorliegenden Systeme 2 kann insbesondere ein Verfahren zur Bereitstellung des Fördergeschwindigkeitsprofils für wahlweise zumindest eines, mehrerer oder aller Förderbänder 130 der Produktionsanlage 1 ausgeführt werden. Bei dem Verfahren fördert das jeweilige Förderband 130 die Glasbehälter B ab und es werden Positionsdaten der Glasbehälter B auf dem Förderband 130 erfasst, wobei auf Grundlage von den Positionsdaten eine Bandlängung bestimmt wird, wobei die Bandlängung sich auf jeweils einzelne Bandsegmente 132 des Förderbands 130 bezieht, wobei auf Grundlage der Bandlängung das Fördergeschwindigkeitsprofil für das jeweilige Förderband 130 bereitgestellt wird. Insbesondere wird bei dem Verfahren das jeweilige Förderband 130 mit konstanter Fördergeschwindigkeit bzw. Drehzahl eines Antriebsmotors betrieben, um das Fördergeschwindigkeitsprofil bereitzustellen.

Es bietet sich an, das Verfahren wiederkehrend durchzuführen, um der Bandlängung zu begegnen. Beispielsweise kann das Verfahren in tage- oder wochenweisen Abständen durchgeführt werden, insbesondere wenn die Produktionsanlage 1 im Dauerbetrieb betrieben wird.

Das jeweilige System 2 weist für die Durchführung des Verfahrens eine Sensorvorrichtung 10 mit einem Reflektor 11 auf, wobei die Sensorvorrichtung 10 eine Lichtschranke zur Erkennung der vorbeigeförderten Glasbehälter B umfasst. Wenn ein Glasbehälter B die Lichtschranke passiert, verändert sich beispielsweise das von der Lichtschranke ausgegebene Signal als Bestandteil von Positionsdaten über die Glasbehälter B. Die Lichtschranke ist quer zur Förderrichtung X des als Querband ausgestalteten Förderbands 130 ausgerichtet, also in Richtung Y in Fig. 1. Die Sensorvorrichtung 10 kann die Positionsdaten erfassen und diese an eine Steuerungsvorrichtung 20 senden. Die Steuerungsvorrichtung 20 kann aus den Positionsdaten das Fördergeschwindigkeitsprofil berechnen bzw. ableiten.

Vorliegend ist die Steuerungsvorrichtung 20 dazu ausgebildet, das Fördergeschwindigkeitsprofil bereitzustellen und an eine Antriebseinrichtung eines Förderbands - vorliegend mit Blick auf die Fig. 1 an die Antriebseinrichtung des Querbands - zu senden. Die Steuerungsvorrichtung 20 weist vorliegend eine Schnittstelle auf, die zur kabellosen oder kabelgebundenen Kommunikation ausgebildet ist.

Aus den Positionsdaten lassen sich zeitliche Abstände der geförderten Glasbehälter B zueinander herleiten. Dies wiederum lässt beispielsweise auf die segmentweise Bandlängung schließen, soweit die Abstände untereinander variieren. Es ist möglich, auf der Grundlage aller zeitlichen Abstände bei einem vollen Umlauf des jeweiligen Förderbands 130 auf die Bandlängung insgesamt zu schließen. So wird die Aufreihung aller zeitlicher Abstände dazu genutzt, das Fördergeschwindigkeitsprofil herzuleiten, wobei das jeweilige Förderband 130 in einem Abschnitt mit einem gelängten Bandsegment 132 schneller zu betreiben ist als in einem Abschnitt mit einem Bandsegment 132, das kürzer als das gelängte Bandsegment 132 ist. Anders gesagt kann vorliegend das jeweilige Förderband 130 antriebsseitig beschleunigt werden an Bandstücken, die eine größere Längung aufweisen, und gebremst werden an Bandstücken, die eine geringere Längung aufweisen.

Vorliegend wird das Fördergeschwindigkeitsprofil derart gewählt, dass die Fördergeschwindigkeit je Bandsegment 132 bzw. je mehrerer Bandsegmente 132 proportional gewählt ist zum zeitlichen Abstand je Bandsegment 132 bzw. je mehrerer Bandsegmente 132. Wenn ein zeitlicher Abstand in einem Segment 132 bzw. Abschnitt um einen bestimmten Faktor größer als der Durchschnitt ist, muss die Fördergeschwindigkeit zum Ausgleich in diesem Segment bzw. Abschnitt um den genannten Faktor angehoben werden.

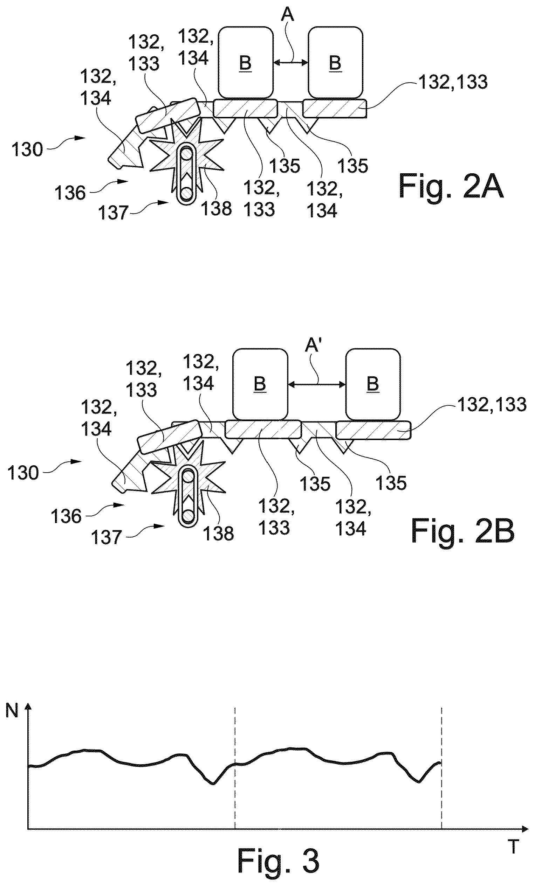

Mit Blick auf Fig. 2A und Fig. 2B ist eine Seitansicht eines exemplarischen Förderbands 130 dargestellt. Das Förderband 130 ist nur abschnittsweise bzw. segmentweise und im Bereich mit einer Antriebseinrichtung 136 dargestellt. Das Förderband 130 ist aus Bandsegmenten 132, 133, 134 zusammengesetzt, wobei abwechselnd Fördersegmente 133 und Verbindungs- und/oder Antriebssegmente 134 zur Verbindung der Fördersegmente 133 vorgesehen sind. Die Bandsegmente 132, 133, 134 können alle Glasbehälter B fördern und sind dazu vorgesehen. Ein von einem Antriebsmotor 137 angetriebenes Antriebsrad 138 mit Zähnen greift in Eingriffsmöglichkeiten 135 von den Verbindungs- und/oder Antriebssegmenten 134 ein. Je nach individueller Bandlängung in den Bandsegmenten 132, 133, 134 entsteht ein örtlicher sowie letztlich auch zeitlicher Abstand A zwischen den Glasbehältern B. Dabei illustriert die Fig. 2A einen Abstand A mit einem normal gelängten Bandsegment 132 und die Fig. 2B dagegen einen Abstand A' mit einem verschleißbedingt erhöht gelängten Bandsegment 132 an demselben Förderband 130, jedoch in einem anderen Abschnitt. In diesen Darstellungen wurde das Förderband 130 jeweils mit konstanter Fördergeschwindigkeit betrieben, so dass der aufgezeigte Unterschied in den Abständen A und A' verdeutlicht vorherrscht. Wenn nun die jeweilige Antriebseinrichtung 136 mit einem die Bandlängung ausgleichenden Fördergeschwindigkeitsprofil betrieben wird, werden die Abstände A, A' in allen Abschnitten eines Förderbands 130 mit individueller Bandlängung näherungsweise vereinheitlicht bzw. gleich groß.

In der Fig. 3 ist exemplarisch ein Verlauf V einer Drehzahl N eines Antriebsmotors 137 einer Antriebseinrichtung 136 eines Förderbands 130 über der Zeit T bei zwei vollen Umläufen des Förderbands 130 dargestellt. Erkennbar wiederholt sich der Drehzahlverlauf V entsprechend der Umläufe. Die Drehzahl verläuft über der Zeit variabel. Beispielsweise wird unter Berücksichtigung gelängter Bandsegmente 132 eine höhere Drehzahl N gewählt als bei weniger gelängten Bandsegmenten 132. Im Grunde kann der zeitabhängige Drehzahlverlauf V als Bestandteil eines Fördergeschwindigkeitsprofils verstanden werden. Zudem muss dieser Drehzahlverlauf V entsprechend der Verortung der individuell gelängten Bandsegmente 132 umgesetzt werden, wozu das Fördergeschwindigkeitsprofil regelmäßig ergänzend eine Zuordnung des Drehzahlverlaufs V zur Drehstellung des Förderbands 130 aufweist, so dass die individuelle Drehzahl N immer im Bereich des richtigen Segments 132 angefahren wird. Ergänzend zum Verlauf V ist der Mittelwert M des Verlaufs V dargestellt, der sich über alle ganzen Bandumläufe hinweg einstellt.

Grundsätzlich ist es besonders vorteilhaft, wenn die Drehzahl N des Antriebsmotors 137 einer Antriebseinrichtung 136 eines Förderbands 130 bei einem vollen Bandumlauf mit Abweichungen um einen Mittelwert M der Drehzahl während des Bandumlaufs bzw. über die Zeit T betrachtet bei Anwendung des Fördergeschwindigkeitsprofils oberhalb von einer Untergrenze MIN von z. B. wenigstens 50 % und/oder unterhalb von einer Obergrenze MAX von z. B. bis zu 150 % des Mittelwerts M schwankt. Insbesondere soll die Drehzahl N bzw. deren Verlauf V den durch die Obergrenze MAX und die Untergrenze MIN gesetzten Bereich nicht verlassen, um eine zuverlässige Förderung zu gewährleisten. Damit werden unerwünschte Drehzahlspitzen vermieden.

Bevorzugt ist es, wenn die Untergrenze MIN 75 % und/oder die Obergrenze 125 % beträgt. Besonders bevorzugt ist eine Untergrenze MIN von 90 % und/oder eine Obergrenze MAX von 110 %. Dabei sollen insbesondere keine Drehzahlen außerhalb des zuvor beschriebenen Bereichs liegen, also unterhalb von der Untergrenze MIN bzw. oberhalb von der Obergrenze MAX, wenn ein standardmäßiger Förderbetrieb eines Förderbands 130 mit diesem Antriebsmotor 137 durchgeführt wird.

Mit Blick auf Fig. 3 beträgt für den Drehzahlverlauf V die Obergrenze MAX etwa 110 % und die Obergrenze MIN etwa 80 %, soweit der Mittelwert M zu 100 % angenommen wird. Anders gesagt ist es in Fig. 3 so, dass der Verlauf V der Drehzahl N oberhalb von einer Untergrenze MIN von wenigstens 50 % und/oder unterhalb von einer Obergrenze MAX von bis zu 150 % des Mittelwerts M verläuft und den dadurch gesetzten Bereich nicht verlässt.

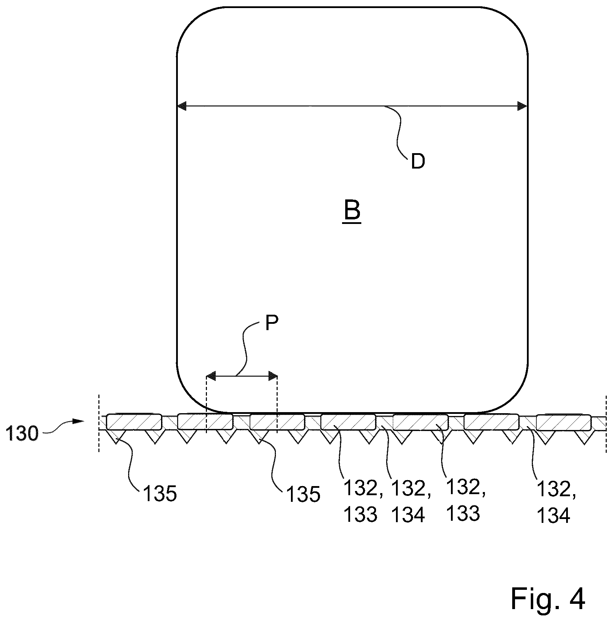

Mit Blick auf Fig. 4 ist eine Seitansicht eines weiteren exemplarischen Förderbands 130 dargestellt, auf dem ein Glasbehälter B platziert ist. Das Förderband 130 ist nur abschnittsweise bzw. segmentweise dargestellt. Das Förderband 130 ist aus Bandsegmenten 132, 133, 134 zusammengesetzt, wobei abwechselnd Fördersegmente 133 und Verbindungs- und/oder Antriebssegmente 134 vorgesehen sind. Die Bandsegmente 132, 133, 134 sind alle zur Förderung von Glasbehältern B vorgesehen, wobei die Verbindungs- und/oder Antriebssegmente 134 zusätzlich unterseitig bzw. abgewandt von den Glasbehältern B antreibbar sind. Ein von einem Antriebsmotor 137 angetriebenes Antriebsrad 138 mit hier nicht dargestellten Zähnen kann in Eingriffsmöglichkeiten 135 der Verbindungs- und/oder Antriebssegmenten 134 eingreifen.

Mit Blick auf Fig. 4 ist je Bandsegment 132, 133, 134 oder je zwei benachbarter Bandsegmente 132, 133, 134 zumindest ein Abschnitt des Glasbehälters B darauf platziert bzw. wird von diesen gefördert. Zwei benachbarte Bandsegmente 132, 133, 134 weisen in Umfangsrichtung des Förderbands 130 einen Pitch P bzw. Abstand von ca. 12,7 mm auf. Mehrere benachbarte Bandsegmente 132, 133, 134 fördern einen ganzen Glasbehälter B ab, wobei jedes dieser Bandsegmente 132, 133, 134 einen Abschnitt des Glasbehälters B trägt. Der Glasbehälter B erstreckt sich über mehrere Pitches (vorliegend über mindestens vier), entsprechend seiner Größe D bzw. seines im Wesentlichen auf den Bandsegmenten 132, 133, 134 aufstehenden bzw. diese bedeckenden Durchmessers.

### Bezugszeichenliste

- 1: Produktionsanlage
- 2: System
- 10: Sensorvorrichtung
- 11: Reflektor
- 20: Steuerungsvorrichtung
- 100: IS-Maschine
- 102: Umlenkecke
- 104: Kühlofen

- 130: Förderband
- 132: Bandsegment
- 133: Fördersegment
- 134: Verbindungs- und/oder Antriebssegment
- 135: Eingriffsmöglichkeit
- 136: Antriebseinrichtung
- 137: Antriebsmotor
- 138: Antriebsrad

- A, A': Abstand
- B: Glasbehälter
- D: Größe
- N: Drehzahl
- P: Pitch
- T: Zeit
- X: Richtung
- Y: Richtung

## Patentansprüche

1. Verfahren zur Bereitstellung eines Fördergeschwindigkeitsprofils für eine Antriebseinrichtung (136) eines Förderbands (130) einer Produktionsanlage (1), wobei die Produktionsanlage eine IS-Maschine (100) zur Herstellung von Glasbehälter (B) und das Förderband (130) zum Fördern der Glasbehälter (B) aufweist, wobei auf dem Förderband (130) Glasbehälter (B) platziert werden und/oder das Förderband (130) Glasbehälter (B) abfördert, **dadurch gekennzeichnet, dass** Positionsdaten der Glasbehälter (B) auf dem Förderband (130) erfasst werden, wobei auf der Grundlage der Positionsdaten eine Bandlängung bestimmt wird, wobei die Bandlängung sich auf jeweils einzelne Bandsegmente (132, 133, 134) des Förderbands (130) bezieht und wobei auf der Grundlage der Bandlängung das Fördergeschwindigkeitsprofil für das Förderband (130) bereitgestellt wird.

2. Verfahren nach Anspruch 1, wobei je Bandsegment (132, 133, 134) oder je zwei benachbarter Bandsegmente (132, 133, 134) zumindest ein Abschnitt eines einzelnen Glasbehälters (B) platziert und/oder abgefördert wird, insbesondere wobei zwei benachbarte Bandsegmente (132, 133, 134) in einer Umfangsrichtung des Förderbands (130) einen Pitch (P) im Bereich zwischen 5 und 25 mm, insbesondere einen Pitch (P) von 12,7 mm ± 2 mm, ausbilden.

3. Verfahren nach einem der voranstehenden Ansprüche, wobei auf Grundlage der Positionsdaten zeitliche und/oder örtliche Abstände von geförderten Glasbehältern (B) zueinander bestimmt werden.

4. Verfahren nach dem voranstehenden Anspruch, wobei auf Grundlage der Abstände das Fördergeschwindigkeitsprofil bereitgestellt wird.

5. Verfahren nach einem der voranstehenden Ansprüche, wobei das Fördergeschwindigkeitsprofil vorgesehen ist, die Bandlängung im Betrieb des Förderbands (130) auszugleichen, indem das Förderband (130) in einem Abschnitt mit einem gelängten Bandsegment (132, 133, 134) schneller betrieben wird als in einem Abschnitt mit einem Bandsegment (132, 133, 134), das kürzer als das gelängte Bandsegment (132, 133, 134) ist.

6. Verfahren nach einem der voranstehenden Ansprüche, wobei das Fördergeschwindigkeitsprofil an die Antriebseinrichtung (136) gesendet wird oder von der Antriebseinrichtung (136) abgerufen wird.

7. Verfahren nach einem der voranstehenden Ansprüche, wobei die Antriebseinrichtung (136) auf der Grundlage des Fördergeschwindigkeitsprofils betrieben wird.

## Claims

1. A method for providing a conveying speed profile for a drive apparatus (136) of a conveyor belt (130) of a production system (1), the production system comprising an IS machine (100) for manufacturing glass containers (B) and the conveyor belt (130) for conveying the glass containers (B), glass containers (B) being positioned on the conveyor belt (130) and/or the conveyor belt (130) conveying away glass containers (B), **characterized in that** position data for the glass containers (B) on the conveyor belt (130) are detected, a belt elongation being determined on the basis of the position data, the belt elongation relating to individual belt segments (132, 133, 134) of the conveyor belt (130) and the conveying speed profile for the conveyor belt (130) being provided on the basis of the belt elongation.

2. The method according to claim 1, wherein at least one portion of an individual glass container (B) is positioned and/or conveyed away for each belt segment (132, 133, 134) or each two adjacent belt segments (132, 133, 134), in particular wherein two adjacent belt segments (132, 133, 134) form a pitch (P) in the range between 5 and 25 mm, in particular a pitch (P) of 12.7 mm ± 2 mm, in a circumferential direction of the conveyor belt (130).

3. The method according to any one of the preceding claims, wherein time intervals and/or distances of conveyed glass containers (B) from one another are determined on the basis of the position data.

4. The method according to the preceding claim, wherein the conveying speed profile is provided on the basis of the intervals/distances.

5. The method according to any one of the preceding claims, wherein the conveying speed profile is provided to compensate for the belt elongation during operation of the conveyor belt (130) by the conveyor belt (130) being operated faster in a portion having an elongated belt segment (132, 133, 134) than in a portion having a belt segment (132, 133, 134) which is shorter than the elongated belt segment (132, 133, 134).

6. The method according to any one of the preceding claims, wherein the conveying speed profile is sent to the drive apparatus (136) or is retrieved from the drive apparatus (136).

7. The method according to any one of the preceding claims, wherein the drive apparatus (136) is operated on the basis of the conveying speed profile.

## Revendications

1. Procédé de fourniture d'un profil de vitesse de transport pour un appareil d'entraînement (136) d'une bande transporteuse (130) d'un système de production (1), le système de production comprenant une machine IS (100) destinée à fabriquer des récipients en verre (B) et la bande transporteuse (130) destinée à transporter les récipients en verre (B), les récipients en verre (B) étant positionnés sur la bande transporteuse (130) et/ou la bande transporteuse (130) emportant les récipients en verre (B), **caractérisé en ce que** les données de position pour les récipients en verre (B) sur la bande transporteuse (130) sont détectées, un allongement de la bande étant déterminé sur la base des données de position, l'allongement de la bande correspondant à des segments de bande individuels (132, 133, 134) de la bande transporteuse (130) et le profil de vitesse de transport pour la bande transporteuse (130) étant fourni sur la base de l'allongement de la bande.

2. Procédé selon la revendication 1, dans laquelle au moins une partie d'un récipient en verre individuel (B) est positionnée et/ou emportée pour chaque segment de bande (132, 133, 134) ou chaque paire de segments de bande adjacents (132, 133, 134), en particulier dans lequel deux segments de bande adjacents (132, 133, 134) forment un pas (P) dans la plage d'entre 5 et 25 mm, en particulier un pas (P) de 12,7 mm ± 2 mm, dans une direction de la circonférence de la bande transporteuse (130).

3. Procédé selon l'une quelconque des revendications précédentes, dans lequel des intervalles de temps et/ou des distances des récipients en verre (B) transportés les uns par rapport aux autres sont déterminés sur la base des données de position.

4. Procédé selon la revendication précédente, dans lequel le profil de vitesse de transport est fourni sur la base des intervalles/distances.

5. Procédé selon l'une quelconque des revendications précédentes, dans lequel le profil de vitesse de transport est fourni pour compenser l'allongement de la bande pendant le fonctionnement de la bande transporteuse (130) par le fait que la bande transporteuse (130) fonctionne plus vite dans une partie ayant un segment de bande allongé (132, 133, 134) que dans une partie ayant un segment de bande (132, 133, 134) qui est plus court que le segment de bande allongé (132, 133, 134).

6. Procédé selon l'une quelconque des revendications précédentes, dans lequel le profil de vitesse de transport est envoyé à l'appareil d'entraînement (136) ou est récupéré depuis l'appareil d'entraînement (136).

7. Procédé selon l'une quelconque des revendications précédentes, dans lequel l'appareil d'entraînement (136) fonctionne sur la base du profil de vitesse de transport.
